(19) Europäisches Patentamt
European Patent Office
Office européen des brevets

(11) EP 3 864 963 A1

(12) # EUROPEAN PATENT APPLICATION
published in accordance with Art. 153(4) EPC

(43) Date of publication:
**18.08.2021 Bulletin 2021/33**

(21) Application number: **19872003.9**

(22) Date of filing: **02.10.2019**

(51) Int Cl.:
***A01N 47/12*** (2006.01) ***A01N 25/00*** (2006.01)
***A01N 25/04*** (2006.01) ***A01P 3/00*** (2006.01)

(86) International application number:
**PCT/JP2019/038875**

(87) International publication number:
**WO 2020/075585 (16.04.2020 Gazette 2020/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.10.2018 JP 2018192087**

(71) Applicant: **Kumiai Chemical Industry Co., Ltd.**
**Taito-ku**
**Tokyo 110-8782 (JP)**

(72) Inventor: **AMANO Naruki**
**Tokyo 110-8782 (JP)**

(74) Representative: **Vossius & Partner**
**Patentanwälte Rechtsanwälte mbB**
**Siebertstraße 3**
**81675 München (DE)**

(54) **OILY SUSPENSION AGROCHEMICAL COMPOSITION**

(57) An oily suspension agrochemical composition containing (A) a fatty acid methyl ester assuming a liquid state at ordinary temperature, (B) benthiavalicarb-isopropyl, and (C) an alkylarylsulfonate monovalent salt is provided. In the composition, crystal molecules of (B) are preferably dispersed in a continuous phase containing (A) as a main component. (C) is preferably an alkali metal salt, and (A) is preferably a vegetable oil-derived fatty acid methyl ester.

EP 3 864 963 A1

## Description

### TECHNICAL FIELD

The present invention relates to an oily suspension agrochemical composition. More specifically, the present invention relates to an oily suspension agrochemical composition capable of enhancing the agrochemical activity of benthiavalicarb-isopropyl and suppressing an increase in the viscosity even when it is stored as a high-concentration stock solution for a long time.

### BACKGROUND ART

PTLs 1 to 6 disclose that benthiavalicarb-isopropyl (hereinafter, sometimes referred to as BiP) has a high preventive and curative effect against diseases, etc. of agricultural and horticultural crops, causes no chemical damage to the crops, and is excellent in the systemic activity, residual efficacy and rainfastness.

On the other hand, PTLs 7 to 10 disclose that a fatty acid methyl ester, etc. are effective as an adjuvant for enhancing the activity of an agrochemical active ingredient.

Based on these related arts, studies have been made to prepare an agrochemical composition in which BiP and a fatty acid methyl ester (hereinafter, sometimes referred to as FAME) are mixed so as to enhance the agrochemical activity of BiP.

The agrochemical composition having mixed therein BiP and FAME is preferably shipped and stored in the form of a high-concentration oily liquid suspension, diluted with water, etc. at the time of use, and sprayed as an oil dispersion in water.

### CITATION LIST

### PATENT LITERATURE

PTL 1: JP-A-H08-176115 (the term "JP-A" as used herein means an "unexamined published Japanese patent application")
PTL 2: JP-A-H09-183703
PTL 3: JP-A-H09-323984
PTL 4: JP-T-2003-501448 (the term "JP-T" as used herein means a published Japanese translation of a PCT patent application)
PTL 5: JP-T-2005-533837
PTL 6: JP-A-2008-127366
PTL 7: JP-T-2014-520154
PTL 8: JP-T-2013-529660
PTL 9: JP-T-2009-519258
PTL 10: JP-A-H07-010705

### SUMMARY OF INVENTION

### TECHNICAL PROBLEM

However, in the high-concentration oily liquid suspension composition having mixed therein BiP and FAME, an increase in the viscosity is recognized during storage for tens of days. This increase in the viscosity of the composition poses a problem that the operation efficiency of dilution with water, etc. deteriorates at the time of use, i.e., at the preparation of a spraying solution.

Therefore, an object of the present invention is to provide an oily suspension agrochemical composition that is a high-concentration oily liquid suspension composition having mixed therein BiP and FAME, nevertheless, is prevented from an increase in the viscosity due to a long-term storage while maintaining the high agrochemical activity of BiP

### SOLUTION TO PROBLEM

As a result of many intensive studies to attain the object above, the present inventor have found that when an alkylarylsulfonate monovalent salt is incorporated into a high-concentration oily liquid suspension composition having

mixed therein BiP and FAME, an increase in the viscosity due to a long-term storage is not caused. This finding has led to the present invention.

That is, the embodiments of the present invention are as follows.

(1) An oily suspension agrochemical composition containing (A) a fatty acid methyl ester assuming a liquid state at ordinary temperature, (B) benthiavalicarb-isopropyl, and (C) an alkylarylsulfonate monovalent salt.
(2) The oily suspension agrochemical composition according to (1), wherein crystal molecules of (B) benthiavalicarb-isopropyl are dispersed in a continuous phase containing the (A) fatty acid methyl ester as a main component.
(3) The oily suspension agrochemical composition according to (1) or (2), wherein the (C) alkylarylsulfonate monovalent salt is an alkali metal salt.
(4) The oily suspension agrochemical composition according to any one of (1) to (3), wherein the (C) alkylarylsulfonate monovalent salt is an alkylnaphthalenesulfonate salt.
(5) The oily suspension agrochemical composition according to any one of (1) to (3), wherein the (C) alkylarylsulfonate monovalent salt is a dialkylarylsulfonate salt.
(6) The oily suspension agrochemical composition according to any one of (1) to (3), wherein the (A) fatty acid methyl ester is a vegetable oil-derived fatty acid methyl ester.

ADVANTAGEOUS EFFECTS OF INVENTION

According to the oily suspension agrochemical composition of the present invention, an increase in the viscosity due to a long-term storage can be suppressed while maintaining the high agrochemical activity of BiP.

DESCRIPTION OF EMBODIMENTS

The oily suspension agrochemical composition (hereinafter, sometimes simply referred to as "agrochemical composition") of the present invention is described in detail by referring to the following embodiments.

The agrochemical composition of this embodiment contains (A) FAME assuming a liquid state at ordinary temperature, (B) BiP, and (C) an alkylarylsulfonate monovalent salt. Incidentally, the expression "assuming a liquid state at ordinary temperature" means to be a liquid at a temperature of 20°C and preferably, means to be a liquid at 20°C±15°C that is a temperature specified in JIS Z 8703-1983.

The agrochemical composition of this embodiment is preferably an oily liquid suspension where crystal molecules of (B) BiP are dispersed in an oily continuous phase containing, as a main component, (A) FAME assuming a liquid state at ordinary temperature. Incidentally, in the present description, the term "an oily continuous phase containing (A) FAME as a main component" indicates a phase constituted by FAME serving as a dispersion medium of the agrochemical composition. In other words, the agrochemical composition of this embodiment is preferably an oily liquid suspension where crystal molecules of BiP are dispersed in a dispersion medium containing FAME.

Here, the (A) FAME contained in the agrochemical composition of this embodiment encompasses both those constituted of a single kind of fatty acid methyl ester and those constituted as a mixture of a plurality of kinds of fatty acid methyl esters. The (A) FAME is not particularly limited as long as it is water-insoluble (lipophilicity) and assumes a liquid state at ordinary temperature, but the fatty acid methyl ester is preferably an unsaturated fatty acid methyl ester, more preferably an unsaturated fatty acid methyl ester having a carbon number of 14 to 20 ($C_{14-20}$ unsaturated fatty acid methyl ester). The $C_{14-20}$ unsaturated fatty acid methyl ester is not particularly limited but includes, for example, methyl 12-tridecenoate, methyl myristoleate, methyl palmitoleate, methyl oleate, methyl linoleate, and methyl linolenate, etc. Among these, methyl oleate, methyl linoleate, and methyl linolenate are preferred, and methyl oleate is more preferred.

In addition, the (A) FAME is preferably, among others, a vegetable oil-derived fatty acid methyl ester. The vegetable oil is not particularly limited but includes, for example, soybean oil, rapeseed oil, olive oil, castor oil, sunflower oil, coconut oil, corn oil, cottonseed oil, linseed oil, palm oil, peanut oil, safflower oil, sesame oil, and tung oil, etc. The vegetable oil-derivative fatty acid methyl ester includes, as an example, those containing methyl oleate as a main component and containing, as another FAME, methyl linoleate, methyl linolenate, methyl palmitoleate, etc. The expression "containing methyl oleate as a main component" as used herein indicates that methyl oleate accounts for 50 mass% or more in the composition of FAME. The FAME containing methyl oleate as a main component is obtained, for example, by using an oleic acid-rich vegetable oil, such as rapeseed oil, olive oil, sunflower oil or safflower oil, as a raw material and subjecting the raw material to methyl esterification. With respect to some plants such as sunflower and safflower, cultivars producing a vegetable oil having a particularly high oleic acid content among the same plant species are known, and when a vegetable oil extracted from those cultivars is used as the raw material, FAME having a higher methyl oleate content can be obtained. The vegetable oil-derived fatty acid methyl ester is preferably a fatty acid methyl ester containing methyl oleate as a main component. Furthermore, the vegetable oil-derived fatty acid methyl ester is more preferably a

fatty acid methyl ester where methyl oleate accounts for 60 mass% or more in the composition of FAME, still more preferably a fatty acid methyl ester where methyl oleate accounts for 70 mass% or more in the composition of FAME.

The content (concentration) of (A) FAME in the agrochemical composition of this embodiment is not particularly limited, but the lower limit thereof is preferably 30 mass% or more, more preferably 40 mass% or more, still more preferably 50 mass% or more, and the upper limit is preferably 90 mass% or less, more preferably 75 mass% or less, still more preferably 60 mass% or less.

The (B) BiP contained in the agrochemical composition of this embodiment is sometimes referred to as isopropyl[(S)-1-{[(R)-1-(6-fluoro-1,3-benzothiazol-2-yl)-ethyl]carbamoyl}-2-methylpropyl]carbamate. The CAS registry number is 177406-68-7, the CBNumber is CB21120099, and the structural formula is as follows.

[Chem. 1]

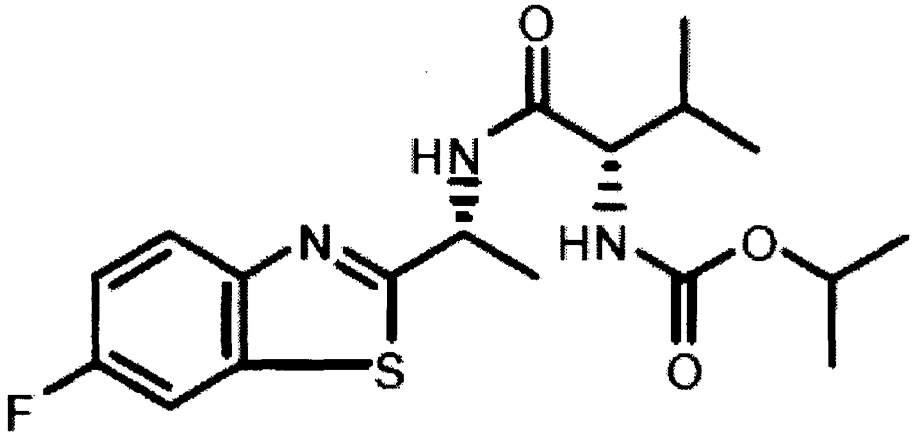

The (B) BiP is an amino acid amide carbamate-based fungicide and has a stable, high control effect against various diseases caused by downy mildew fungus and Phytophthora fungus belonging to oomycetes. In addition, this fungicide has not only a preventive effect but also a curative effect and therefore, can exhibit a control effect even by spraying after infection and stop lesion expansion at the early stage of infection.

The content (concentration) of (B) BiP in the agrochemical composition of this embodiment is not particularly limited, but the lower limit thereof is preferably 1 mass% or more, more preferably 3.5 mass% or more, and the upper limit is preferably 20 mass% or less, more preferably 9 mass% or less.

The (C) alkylarylsulfonate monovalent salt contained in the agrochemical composition of this embodiment is not particularly limited as long as the counter cation is a monovalent cation. The monovalent counter cation in the component (C) of this embodiment is not particularly limited but includes an ammonium ion, an alkali metal ion, etc., with an alkali metal ion being preferred. Among alkali metal ions, sodium ion is preferred.

The alkyl moiety (alkyl group) in the component (C) is not particularly limited and may be a linear alkyl group, a branched alkyl group or a cyclic alkyl group.

In addition, the component (C) may have a multi-alkyl structure having a plurality of alkyl moieties (alkyl groups). However, if the number of alkyl groups is too large, the structure or handling may be complicated. Therefore, the number of alkyl groups is preferably from 2 to 3, more preferably 2.

The carbon number of the alkyl group is preferably from 1 to 20, more preferably from 3 to 15.

Specific examples of the alkyl group include a propyl group, an isopropyl group, a butyl group, an isobutyl group, a pentyl group, an isopentyl group, a hexyl group, an isohexyl group, a heptyl group, an isoheptyl group, an octyl group, an isooctyl group, a nonyl group, an isononyl group, a decyl group, an isodecyl group, a undecyl group, an isoundecyl group, a dodecyl group, an isododecyl group, a tridecyl group, an isotridecyl group, a tetradecyl group, an isotetradecyl group, a pentadecyl group, an isopentadecyl group, a hexadecyl group, an isohexadecyl group, a heptadecyl group, an isoheptadecyl group, an octadecyl group, an isooctadecyl group, a nonadecyl group, an isononadecyl group, an icosyl group, and an isoicosyl group, and preferred are a propyl group, an isopropyl group, a butyl group, an isobutyl group, a pentyl group, an isopentyl group, a hexyl group, an isohexyl group, a heptyl group, an isoheptyl group, an octyl group, an isooctyl group, a nonyl group, an isononyl group, a decyl group, an isodecyl group, a undecyl group, an isoundecyl group, a dodecyl group, an isododecyl group, a tridecyl group, an isotridecyl group, a tetradecyl group, an isotetradecyl group, a pentadecyl group, an isopentadecyl group, etc.

The aryl moiety in the component (C) of this embodiment is not particularly limited, but specific examples thereof include benzene, naphthalene, and anthracene, and among these, naphthalene is preferred.

Specific examples of the component (C) of this embodiment include:

sodium dimethylbenzenesulfonate, sodium diethylbenzenesulfonate, sodium dibutylbenzenesulfonate, sodium diisobutylbenzenesulfonate, sodium dipropylbenzenesulfonate, sodium diisopropylbenzenesulfonate, sodium dibutylbenzenesulfonate, sodium diisobutylbenzenesulfonate, sodium dipentylbenzenesulfonate, sodium diisopentylbenzenesulfonate, sodium dihexylbenzenesulfonate, sodium diisohexylbenzenesulfonate, sodium diheptylbenzenesulfonate, sodium diisoheptylbenzenesulfonate, sodium dioctylbenzenesulfonate, sodium diisooctylbenzenesulfonate, sodium dinonylbenzenesulfonate, sodium diisononylbenzenesulfonate, sodium didecylbenzenesulfonate, sodium diisodecylbenzenesulfonate, sodium diundecylbenzenesulfonate, sodium diisoundecylbenzenesulfonate, sodium didodecylbenzenesulfonate, sodium diisododecylbenzenesulfonate,
sodium methylbenzenesulfonate, sodium ethylbenzenesulfonate, sodium butylbenzenesulfonate, sodium isobutylbenzenesulfonate, sodium propylbenzenesulfonate, sodium isopropylbenzenesulfonate, sodium pentylbenzenesulfonate, sodium isopentylbenzenesulfonate, sodium hexylbenzenesulfonate, sodium isohexylbenzenesulfonate, sodium heptylbenzenesulfonate, sodium isoheptylbenzenesulfonate, sodium octylbenzenesulfonate, sodium isooctylbenzenesulfonate, sodium nonylbenzenesulfonate, sodium isononylbenzenesulfonate, sodium decylbenzenesulfonate, sodium isodecylbenzenesulfonate, sodium undecylbenzenesulfonate, sodium isoundecylbenzenesulfonate, sodium dodecylbenzenesulfonate, sodium isododecylb enzenesulfonate,
potassium dimethylbenzenesulfonate, potassium diethylbenzenesulfonate, potassium dibutylbenzenesulfonate, potassium diisobutylbenzenesulfonate, potassium dipropylbenzenesulfonate, potassium diisopropylbenzenesulfonate, potassium dibutylbenzenesulfonate, potassium diisobutylbenzenesulfonate, potassium dipentylbenzenesulfonate, potassium diisopentylbenzenesulfonate, potassium dihexylbenzenesulfonate, potassium diisohexylbenzenesulfonate, potassium diheptylbenzenesulfonate, potassium diisoheptylbenzenesulfonate, potassium dioctylbenzenesulfonate, potassium diisooctylbenzenesulfonate, potassium dinonylbenzenesulfonate, potassium diisononylbenzenesulfonate, potassium didecylbenzenesulfonate, potassium diisodecylbenzenesulfonate, potassium diundecylbenzenesulfonate, potassium diisoundecylbenzenesulfonate, potassium didodecylbenzenesulfonate, potassium diisododecylbenzenesulfonate,
potassium methylbenzenesulfonate, potassium ethylbenzenesulfonate, potassium butylbenzenesulfonate, potassium isobutylbenzenesulfonate, potassium propylbenzenesulfonate, potassium isopropylbenzenesulfonate, potassium pentylbenzenesulfonate, potassium isopentylbenzenesulfonate, potassium hexylbenzenesulfonate, potassium isohexylbenzenesulfonate, potassium heptylbenzenesulfonate, potassium isoheptylbenzenesulfonate, potassium octylbenzenesulfonate, potassium isooctylbenzenesulfonate, potassium nonylbenzenesulfonate, potassium isononylbenzenesulfonate, potassium decylbenzenesulfonate, potassium isodecylbenzenesulfonate, potassium undecylbenzenesulfonate, potassium isoundecylbenzenesulfonate, potassium dodecylbenzenesulfonate, potassium isododecylbenzenesulfonate,
ammonium dimethylbenzenesulfonate, ammonium diethylbenzenesulfonate, ammonium dibutylbenzenesulfonate, ammonium diisobutylbenzenesulfonate, ammonium dipropylbenzenesulfonate, ammonium diisopropylbenzenesulfonate, ammonium dibutylbenzenesulfonate, ammonium diisobutylbenzenesulfonate, ammonium dipentylbenzenesulfonate, ammonium diisopentylbenzenesulfonate, ammonium dihexylbenzenesulfonate, ammonium diisohexylbenzenesulfonate, ammonium diheptylbenzenesulfonate, ammonium diisoheptylbenzenesulfonate, ammonium dioctylbenzenesulfonate, ammonium diisooctylbenzenesulfonate, ammonium dinonylbenzenesulfonate, ammonium diisononylbenzenesulfonate, ammonium didecylbenzenesulfonate, ammonium diisodecylbenzenesulfonate, ammonium diundecylbenzenesulfonate, ammonium diisoundecylbenzenesulfonate, ammonium didodecylbenzenesulfonate, ammonium diisododecylbenzenesulfonate,
ammonium methylbenzenesulfonate, ammonium ethylbenzenesulfonate, ammonium butylbenzenesulfonate, ammonium isobutylbenzenesulfonate, ammonium propylbenzenesulfonate, ammonium isopropylbenzenesulfonate, ammonium pentylbenzenesulfonate, ammonium isopentylbenzenesulfonate, ammonium hexylbenzenesulfonate, ammonium isohexylbenzenesulfonate, ammonium heptylbenzenesulfonate, ammonium isoheptylbenzenesulfonate, ammonium octylbenzenesulfonate, ammonium isooctylbenzenesulfonate, ammonium nonylbenzenesulfonate, ammonium isononylbenzenesulfonate, ammonium decylbenzenesulfonate, ammonium isodecylbenzenesulfonate, ammonium undecylbenzenesulfonate, ammonium isoundecylbenzenesulfonate, ammonium dodecylbenzenesulfonate, ammonium isododecylbenzenesulfonate,
sodium dimethylnaphthalenesulfonate, sodium diethylnaphthalenesulfonate, sodium dibutylnaphthalenesulfonate, sodium diisobutylnaphthalenesulfonate, sodium dipropylnaphthalenesulfonate, sodium diisopropylnaphthalenesulfonate, sodium dipentylnaphthalenesulfonate, sodium diisopentylnaphthalenesulfonate, sodium dihexylnaphthalenesulfonate, sodium diisohexylnaphthalenesulfonate, sodium diheptylnaphthalenesulfonate, sodium diisoheptylnaphthalenesulfonate, sodium dioctylnaphthalenesulfonate, sodium diisooctylnaphthalenesulfonate, sodium dinonylnaphthalenesulfonate, sodium diisononylnaphthalenesulfonate, sodium didecylnaphthalenesulfonate, sodium diisodecylnaphthalenesulfonate, sodium diundecylnaphthalenesulfonate, sodium diisoundecylnaphthalenesulfonate, sodium didodecylnaphthalenesulfonate, sodium diisododecylnaphthalenesulfonate,
sodium methylnaphthalenesulfonate, sodium ethylnaphthalenesulfonate, sodium butylnaphthalenesulfonate, sodium isobutylnaphthalenesulfonate, sodium propylnaphthalenesulfonate, sodium isopropylnaphthalenesulfonate, sodium isopropylnaphthalenesulfonate, sodium pentylnaphthalenesulfonate, sodium isopentylnaphthalenesulfonate, sodium hexylnaphthalenesulfonate, sodium isohexylnaphthalenesulfonate, sodium heptylnaphthalenesulfonate, sodium isoheptylnaphthalenesulfonate, sodium octylnaphthalenesulfonate, sodium isooctylnaphthalenesulfonate, sodium nonylnaphthalenesulfonate, sodium isononylnaphthalenesulfonate, sodium decylnaphthalenesulfonate, sodium isodecylnaphthalenesulfonate, sodium undecylnaphthalenesulfonate, sodium isoundecylnaphthalenesulfonate, sodium dodecylnaphthalenesulfonate, sodium isododecylnaphthalenesulfonate,

potassium dimethylnaphthalenesulfonate, potassium diethylnaphthalenesulfonate, potassium dibutylnaphthalenesulfonate, potassium diisobutylnaphthalenesulfonate, potassium dipropylnaphthalenesulfonate, potassium diisopropylnaphthalenesulfonate, potassium dibutylnaphthalenesulfonate, potassium diisobutylnaphthalenesulfonate, potassium dipentylnaphthalenesulfonate, potassium diisopentylnaphthalenesulfonate, potassium dihexylnaphthalenesulfonate, potassium diisohexylnaphthalenesulfonate, potassium diheptylnaphthalenesulfonate, potassium diisoheptylnaphthalenesulfonate, potassium dioctylnaphthalenesulfonate, potassium diisooctylnaphthalenesulfonate, potassium dinonylnaphthalenesulfonate, potassium diisononylnaphthalenesulfonate, potassium didecylnaphthalenesulfonate, potassium diisodecylnaphthalenesulfonate, potassium diundecylnaphthalenesulfonate, potassium diisoundecylnaphthalenesulfonate, potassium didodecylnaphthalenesulfonate, potassium diisododecylnaphthalenesulfonate,

potassium methylnaphthalenesulfonate, potassium ethylnaphthalenesulfonate, potassium butylnaphthalenesulfonate, potassium isobutylnaphthalenesulfonate, potassium propylnaphthalenesulfonate, potassium isopropylnaphthalenesulfonate, potassium pentylnaphthalenesulfonate, potassium isopentylnaphthalenesulfonate, potassium hexylnaphthalenesulfonate, potassium isohexylnaphthalenesulfonate, potassium heptylnaphthalenesulfonate, potassium isoheptylnaphthalenesulfonate, potassium octylnaphthalenesulfonate, potassium isooctylnaphthalenesulfonate, potassium nonylnaphthalenesulfonate, potassium isononylnaphthalenesulfonate, potassium decylnaphthalenesulfonate, potassium isodecylnaphthalenesulfonate, potassium undecylnaphthalenesulfonate, potassium isoundecylnaphthalenesulfonate, potassium dodecylnaphthalenesulfonate, potassium isododecylnaphthalenesulfonate,

ammonium dimethylnaphthalenesulfonate, ammonium diethylnaphthalenesulfonate, ammonium dibutylnaphthalenesulfonate, ammonium diisobutylnaphthalenesulfonate, ammonium dipropylnaphthalenesulfonate, ammonium diisopropylnaphthalenesulfonate, ammonium dibutylnaphthalenesulfonate, ammonium diisobutylnaphthalenesulfonate, ammonium dipentylnaphthalenesulfonate, ammonium diisopentylnaphthalenesulfonate, ammonium dihexylnaphthalenesulfonate, ammonium diisohexylnaphthalenesulfonate, ammonium diheptylnaphthalenesulfonate, ammonium diisoheptylnaphthalenesulfonate, ammonium dioctylnaphthalenesulfonate, ammonium diisooctylnaphthalenesulfonate, ammonium dinonylnaphthalenesulfonate, ammonium diisononylnaphthalenesulfonate, ammonium didecylnaphthalenesulfonate, ammonium diisodecylnaphthalenesulfonate, ammonium diundecylnaphthalenesulfonate, ammonium diisoundecylnaphthalenesulfonate, ammonium didodecylnaphthalenesulfonate, ammonium diisododecylnaphthalenesulfonate,

ammonium methylnaphthalenesulfonate, ammonium ethylnaphthalenesulfonate, ammonium butylnaphthalenesulfonate, ammonium isobutylnaphthalenesulfonate, ammonium propylnaphthalenesulfonate, ammonium isopropylnaphthalenesulfonate, ammonium pentylnaphthalenesulfonate, ammonium isopentylnaphthalenesulfonate, ammonium hexylnaphthalenesulfonate, ammonium isohexylnaphthalenesulfonate, ammonium heptylnaphthalenesulfonate, ammonium isoheptylnaphthalenesulfonate, ammonium octylnaphthalenesulfonate, ammonium isooctylnaphthalenesulfonate, ammonium nonylnaphthalenesulfonate, ammonium isononylnaphthalenesulfonate, ammonium decylnaphthalenesulfonate, ammonium isodecylnaphthalenesulfonate, ammonium undecylnaphthalenesulfonate, ammonium isoundecylnaphthalenesulfonate, ammonium dodecylnaphthalenesulfonate, and ammonium isododecylnaphthalenesulfonate.

Incidentally, the component (C) of this embodiment has a function as an emulsifier and has a function as a wet-spreading dispersant when preparing a diluted solution.

The content (concentration) of the (C) alkylarylsulfonate monovalent salt in the agrochemical composition of this embodiment is not particularly limited, but the lower limit thereof is preferably 0.1 mass% or more, more preferably 3 mass% or more, and the upper limit is preferably 15 mass% or less, more preferably 8 mass% or less.

Note that the component (C) in the agrochemical composition of this embodiment can act as a wet-spreading dispersant in a use form, i.e., in a spraying solution prepared by diluting the agrochemical composition with an aqueous liquid medium.

The agrochemical composition of this embodiment may contain one type of each of the components (A) to (C) or may contain two or more types of each component.

The agrochemical composition of this embodiment is not particularly limited as long as it contains the above-described three components (A) to (C), but other than these, various adjuvant components known or well-known for

incorporation in an agrochemical composition may be contained, if desired.

Various adjuvant components that can be incorporated into the agrochemical composition of this embodiment may be any as long as it is used in the relevant technical field, etc., but examples thereof include an emulsifier, a solvent, an anti-settling agent, an antifoaming agent, an anti-freezing agent, an antioxidant, a gelling agent, a dispersion stabilizer, a safener, an anti-mold agent, a stabilizer, and a preservative. Specific examples of these various adjuvants include the followings. In addition, in the case of adding various adjuvants to the agrochemical composition of this embodiment, the total content (concentration) of various adjuvants is not particularly limited but is preferably more than 0 mass% and 70 mass% or less. Incidentally, the agrochemical composition can be produced according to a usual method in the relevant technical field.

The emulsifier may be any as long as it is used in the relevant technical field, etc., but examples thereof include an alkanesulfonate salt, an $\alpha$-sulfofatty acid salt, a dialkylsulfosuccinate salt, a divalent or higher salt of alkylarylsulfonic acid, a formalin condensate of naphthalenesulfonate salt, a polyoxyethylene (POE) alkyl ether, a POE alkylaryl ether, a POE styrylphenyl ether, a POE fatty acid ester, a POE sorbitan fatty acid ester, a POE sorbitol fatty acid ester, a POE castor oil, a POE hydrogenated castor oil, a polyglycerin fatty acid ester, and a POE-polyoxypropylene (POP) block copolymer. A dialkylsulfosuccinate salt, a divalent or higher salt of alkylarylsulfonic acid, a POE fatty acid ester, a POE sorbitol fatty acid ester, a POE castor oil, and a POE hydrogenated castor oil are preferred, and if desired, these may be mixed and used. A divalent or higher salt of alkylarylsulfonic acid, a POE sorbitol fatty acid ester, a POE castor oil, and a mixture thereof are more preferred, and among these, a POE sorbitol fatty acid ester is still more preferred, but the present invention should not be construed as being limited thereto. In the case of adding an emulsifier other than the component (C) to the agrochemical composition of this embodiment, the content (concentration) of the emulsifier is not particularly limited, but the lower limit thereof is preferably 5 mass% or more, more preferably 10 mass% or more, still more preferably 20 mass% or more, and the upper limit is preferably 70 mass% or less, more preferably 60 mass% or less, still more preferably 50 mass% or less.

The solvent includes aliphatic hydrocarbons such as normal paraffin and isoparaffin, aromatic hydrocarbons such as benzene, alkylbenzene, naphthalene, alkylnaphthalene and phenylxylylethane, heterocyclic compounds such as N-methylpyrrolidone and 1,3-dimethyl-2-imidazolidinone, alcohols, ethers, ketones, esters, etc., and two or more of these may be appropriately used together, if desired.

The anti-settling agent includes, for example, silica, organic bentonite, bentonite, and aluminum magnesium silicic acid, etc., and two or more of these may be appropriately used together, if desired. In the case of adding an anti-settling agent to the agrochemical composition of this embodiment, the content (concentration) of the anti-settling agent is not particularly limited, but the lower limit thereof is preferably 0.1 mass% or more, more preferably 0.3 mass% or more, and the upper limit is preferably 5 mass% or less, more preferably 1 mass% or less.

The antifoaming agent includes, for example, alcohols such as isooctadecanol, and methylated silicone, etc., and two or more of these may be appropriately used together, if desired.

The antifreezing agent includes, for example, ethylene glycol, propylene glycol, and glycerin, etc., and two or more of these may be appropriately used together, if desired.

The gelling agent includes, for example, silica, organic attapulgite, clay, hydrogenated castor oil, a higher fatty acid ester, a higher alcohol, a salt of dialkylsulfosuccinic acid ester, a benzoate salt, an alkylsulfate salt, a mixture of a polyacrylic acid polymer or polyacrylic acid copolymer and water, and 12-hydroxystearic acid, etc., and two or more of these may be appropriately used together, if desired.

In the agrochemical composition of this embodiment, emulsification of (A) FAME can be facilitated without performing a cumbersome stirring operation, etc., but it is preferable to add other surfactants, etc.

Other surfactants (emulsifiers), etc. capable of facilitating emulsification of (A) FAME include a POE dodecyl ether (nonionic), a calcium branched dodecylbenzenesulfonate (anionic), a POE castor oil (nonionic), and a POE sorbitol hexaoleate (nonionic), etc., and these are preferably used in combination. In the case of adding these other surfactants to the agrochemical composition of this embodiment, the content (concentration) of the other surfactants is not particularly limited but may be the same as the content (concentration) described above regarding the emulsifier.

In addition, the agrochemical composition of this embodiment may contain, if desired, an agrochemical active ingredient other than (B) BiP.

The agrochemical active ingredient other than (B) BiP, which the agrochemical composition of this embodiment may contain, if desired, includes an insecticide, an acaricide, a nematicide, a soil pesticide, a bactericide, an antiviral agent, an attractant, a herbicide, and a plant growth regulator, etc., and they can be used together or in combination with (B) BiP. In this case, a more excellent effect or action is sometimes exhibited. For example, the range of treatable pests, the timing of chemical treatment, the pest control activity, etc. may be improved better. Incidentally, separately prepared formulations of (B) BiP and another agrochemical active ingredient may be used by mixing them at the time of spraying, or a preparation obtained by formulating both together may be used. The present invention includes the above-described agrochemical composition and a method for controlling pests by using the agrochemical composition.

The another agricultural chemical that can be used together with (B) BiP includes, for example, the following

compounds, but even if not specifically described, when salts, alkyl esters, various structural isomers such as optical isomers, etc. of these compounds are present, they are also encompassed as a matter of course.

The active ingredient compounds of an insecticide, an acaricide, a nematicide or a soil pesticide out of the other agrochemical active ingredients above, i.e., the insecticidal compounds (common names, including those under application; or test codes) that can be used together or used in combination, include, for example, organic phosphate ester-based compounds such as profenofos, dichlorvos, fenamiphos, fenitrothion, EPN, diazinon, chlorpyrifos, chlorpyrifos-methyl, acephate, prothiofos, fosthiazate, cadusafos, dislufoton, isoxathion, isofenphos, ethion, etrimfos, quinalphos, dimethylvinphos, dimethoate, sulprofos, thiometon, vamidothion, pyraclofos, pyridaphenthion, pirimiphos-methyl, propaphos, phosalone, formothion, malathion, tetrachlorvinphos, chlorfenvinphos, cyanophos, trichlorfon, methidathion, phenthoate, ESP, azinphos-methyl, fenthion, heptenophos, methoxychlor, parathion, phosphocarb, demeton-S-methyl, monocrotophos, methamidophos, imicyafos, parathion-methyl, terbufos, phosphamidon, phosmet, phorate, phoxim, and triazophos;

carbamate-based compounds such as carbaryl, propoxur, aldicarb, carbofuran, thiodicarb, methomyl, oxamyl, ethiofencarb, pirimicarb, fenobucarb, carbosulfan, benfuracarb, bendiocarb, furathiocarb, isoprocarb, metolcarb, xylylcarb, XMC, and fenothiocarb;
nereistoxin derivatives such as cartap, thiocyclam, bensultap, thiosultap-sodium, thiosultap-disodium, monosultap, bisultap, and thiocyclam hydrogen oxalate;
organochlorine-based compounds such as dicofol, tetradifon, endosulfan, dienochlor, and dieldrin;
organometallic compounds such as fenbutatin oxide and cyhexatin;
pyrethroid-based compounds such as fenvalerate, permethrin, cypermethrin, deltamethrin, cyhalothrin, tefluthrin, ethofenprox, flufenprox, cyfluthrin, fenpropathrin, flucythrinate, fluvalinate, cycloprothrin, lambda-cyhalothrin, pyrethrins, esfenvalerate, tetramethrin, resmethrin, protrifenbute, bifenthrin, zeta-cypermethrin, acrinathrin, alpha-cypermethrin, allethrin, gamma-cyhalothrin, theta-cypermethrin, tau-fluvalinate, tralomethrin, profluthrin, beta-cypermethrin, beta-cyfluthrin, metofluthrin, phenothrin, flumethrin, and decamethrin;
benzoylurea-based compounds such as diflubenzuron, chlorfluazuron, teflubenzuron, flufenoxuron, triflumuron, hexaflumuron, lufenuron, novaluron, noviflumuron, bistrifluron, and fluazuron;
juvenile hormone-like compounds such as methoprene, pyriproxyfen, fenoxycarb, and diofenolan;
pyridazinone-based compounds such as pyridaben;
pyrazole-based compounds such as fenpyroximate, fipronil, tebufenpyrad, ethiprole, tolfenpyrad, acetoprole, pyrafluprole, and pyriprole;
neonicotinoid-based compounds such as imidacloprid, nitenpyram, acetamiprid, thiacloprid, thiamethoxam, clothianidin, nidinotefuran, dinotefuran, and nithiazine;
hydrazine-based compounds such as tebufenozide, methoxyfenozide, chromafenozide, and halofenozide;
pyridine-based compounds such as pyridalyl;
cyclic keto-enol-based compounds such as spirodiclofen, spiromesifen, and spirotetramat;
strobilurin-based compounds such as fluacrypyrim;
pyridinamine-based compounds such as flufenerim;
dinitro-based compounds, organic sulfur compounds, urea-based compounds, triazine-based compounds, hydrazone-based compounds, and other compounds such as flometoquin, buprofezin, hexythiazox, amitraz, chlordimeform, silafluofen, triazamate, pymetrozine, pyrimidifen, chlorfenapyr, indoxacarb, acequinocyl, etoxazole, cyromazine, 1,3-dichloropropene, diafenthiuron, benclothiaz, bifenazate, propargite, clofentezine, metaflumizone, flubendiamide, cyflumetofen, chlorantraniliprole, cyantraniliprole, cyclaniliprole, cyenopyrafen, pyrifluquinazon, fenazaquin, amidoflumet, sulfluramid, hydramethylnon, metaldehyde, HGW-86, ryanodine, verbutin, AKD-1022, chlorobenzoate, thiazolylcinnanonitrile, sulfoxaflor, fluensulfone, triflumezopyrim, afidopyropen, and flupyradifuron; etc. Furthermore, the insecticidal compound that can be mixed or used in combination also includes microbial agricultural chemicals, such as crystal protein toxin, insect pathogenic virus agent, insect pathogenic filamentous fungus agent and nematode pathogenic filamentous fungus agent, produced by Bacillus thuringiensis aizawai, Bacillus thuringiensis kurstaki, Bacillus thuringiensis israelensis, Bacillus thuringiensis japonensis, Bacillus thuringiensis tenebrionis, and Bacillus thuringiensis; antibiotics and semi-synthetic antibiotics such as avermectin, emamectin Benzoate, milbemectin, milbemycin, spinosad, ivermectin, lepimectin, DE-175, abamectin, emamectin, and spinetoram; natural products such as azadirachtin and rotenone; repellents such as deet; etc.

The active ingredient compounds of a bactericide out of the other agrochemical active ingredients above, i.e., the bactericidal compounds (common names, including those under application; or test codes of Japan Plant Protection Association), include, for example, anilinopyrimidine-based compounds such as mepanipyrim, pyrimethanil, cyprodinil, and ferimzone;

triazolopyrimidine-based compounds such as 5-chloro-7-(4-methylpiperidin-1-yl)-6-(2,4,6-trifluoropheny1)[1,2,4]triazolo[1,5-a]pyrimidine;
pyridinamine-based compounds such as fluazinam;
azole-based compounds such as triadimefon, bitertanol, triflumizole, etaconazole, propiconazole, penconazole, flusilazole, myclobutanil, cyproconazole, tebuconazole, hexaconazole, furconazole-cis, prochloraz, metconazole, epoxiconazole, tetraconazole, oxpoconazole fumarate, sipconazole, prothioconazole, triadimenol, flutriafol, difenoconazole, fluquinconazole, fenbuconazole, bromuconazole, diniconazole, tricyclazole, probenazole, simeconazole, pefurazoate, ipconazole, and imibenconazole;
quinoxaline-based compounds such as quinomethionate;
dithiocarbamate-based compounds such as maneb, zineb, mancozeb, polycarbamate, metiram, propineb, and thiram;
organic chlorine-based compounds such as fthalide, chlorothalonil, and quintozene;
imidazole-based compounds such as benomyl, cyazofamid, thiophanate-methyl, carbendazim, thiabendazole, and fuberiazole;
cyanoacetamide-based compounds such as cymoxanil:
anilide-based compounds such as metalaxyl, metalaxyl-M, mefenoxam, oxadixyl, ofurace, benalaxyl, benalaxyl-M (another name: kiralaxyl, chiralaxyl), furalaxyl, cyprofuram, carboxin, oxycarboxin, thifluzamide, boscalid, bixafen, isothianil, tiadinil, and sedaxane;
sulfamide-based compounds such as dichlofluanid;
copper-based compounds such as cupric hydroxide and oxine copper;
isoxazole-based compounds such as hymexazol;
organic phosphorous-based compounds such as fosetyl-Al, tolclofos-Methyl, S-benzyl O,O-diisopropylphosphorothioate, O-ethyl-S,S-diphenylphosphorodithioate, aluminum ethyl hydrogen phosphonate, edifenphos, and iprobenfos;
phthalimide-based compounds such as captan, captafol, and folpet;
dicarboximide-based compounds such as procymidone, iprodione, and vinclozolin;
benzanilide-based compounds such as flutolanil and mepronil;
amide-based compounds such as penthiopyrad, a mixture (isopyrazam) of 3-(difluoromethyl)-1-methyl-N-[(1RS,4SR,9RS)-1,2,3,4-tetrahydro-9-isopropyl-1,4-methanonaphthalen-5-yl]pyrazole-4-carboxamide and 3-(difluoromethyl)-1-methyl-N-[(1RS,4SR,9RS)-1,2,3,4-tetrahydro-9-isopropyl-1,4-methanonaphthalen-5-yl]pyrazole-4-carboxamide, silthiopham, fenoxanil, and furametpyr;
benzamide-based compounds such as fluopyram and zoxamide;
piperazine-based compounds triforine;
pyridine-based compounds such as pyrifenox;
carbinol-based compounds such as fenarimol;
piperidine-based compounds such as fenpropidin;
morpholine-based compounds such as fenpropimorph and tridemorph;
organic tin-based compounds such as fentin hydroxide and fentin acetate;
urea-based compounds such as pencycuron;
cinnamic acid-based compounds such as dimethomorph and flumorph;
phenylcarbamate-based compounds such as diethofencarb;
cyanopyrrole-based compounds such as fludioxonil and fenpiclonil;
strobilurin-based compounds such as azoxystrobin, kresoxim-methyl, metominostrobin, trifloxystrobin, picoxystrobin, oryzastrobin, dimoxystrobin, pyraclostrobin, and fluoxastrobin;
oxazolidinone-based compounds such as famoxadone;
thiazolecarboxamide-based compounds such as ethaboxam;
valinamide-based compounds such as iprovalicarb;
acylamino acid-based compounds such as methyl N-(isopropoxycarbonyl)-L-valyl-(3RS)-3-(4-chlorophenyl)-β-alaninate (valiphenalate);
imidazolinone-based compounds such as fenamidone;
hydroxyanilide-based compounds such as fenhexamid;
benzenesulfonamide-based compounds such as flusulfamide;
oxime ether-based compounds such as cyflufenamid;
anthraquinone-based compounds;
crotonic acid-based compounds;
antibiotics such as validamycin, kasugamycin, and polyoxins;
guanidine-based compounds such as iminoctadine and dodine;
quinoline-based compounds such as 6-tertiary-butyl-8-fluoro-2,3-dimethylquinolin-4-yl acetate (tebufloquin);

thiazolidine-based compounds such as (Z)-2-(2-fluoro-5-(trifluoromethyl)phenylthio)-2-(3-(2-methoxyphenyl)thiazolidin-2-ylidene)acetonitrile (flutianil); and

other compounds such as pyribencarb, isoprothiolane, pyroquilon, diclomezine, quinoxyfen, propamocarb hydrochloride, chloropicrin, dazomet, metam-sodium, nicobifen, metrafenone, UBF-307, diclocymet, proquinazid, amisulbrom (another name: amibromdole), 3-(2,3,4-trimethoxy-6-methylbenzoyl)-5-chloro-2-methoxy-4-methylpyridine, 4-(2,3,4-trimethoxy-6-methylbenzoyl)-2,5-dichloro-3-trifluoromethylpyridine, pyriofenone, isofetamid, mandipropamid, fluopicolide, carpropamid, meptyldinocap, spiroxamine, S-2188 (fenpyrazamine), S-2200, ZF-9646, BCF-051, BCM-061, BCM-062, etc.

The agrochemical composition of this embodiment is, at the time of use, diluted with an aqueous liquid medium such as water to prepare a diluted solution as described above.

The dilution ratio when diluting with an aqueous liquid medium varies depending on the concentration of (B) BiP in the agrochemical composition of this embodiment and is therefore not particularly limited but is preferably from 100 to 3,000 times.

In addition, the dilution ratio is preferably set so that the (B) BiP component concentration in the diluted solution can be from 20 to 700 ppm.

The agrochemical composition of this embodiment can be applied to all plant species and all plant parts. The plants should here be understood as meaning all plants and plant populations, such as wild plants or crop plants (encompassing naturally occurring crop plants). The crop plants may be plants that can be obtained by conventional breeding and optimization methods, may be plants that can obtained by biotechnological and genetic engineering methods, or may be plants that can be obtained by combinations of these methods. Such crop plants encompass transgenic plants and also encompass plant cultivars capable or not capable of being protected by plant breeders' certificates. The plant parts should be understood as meaning all above-ground and below-ground parts and organs of plants such as shoots, leaves, flowers and roots, and examples which can be recited are leaves, needles, stalks, stems, flowers, fruiting bodies, fruits and seeds as well as roots, tubers and rhizomes. The plant parts also include harvested plants and vegetative and generative propagation organs, for example, shoot parts with buds, tubers, rhizomes, cuttings, and seeds, etc.

Treatment of plants and plant parts with the agrochemical composition of this embodiment is performed according to customary treatment methods, for example, by using a diluted solution of the agrochemical composition of this embodiment directly such as immersion, spraying, evaporation, fogging, painting, etc. or by allowing the agrochemical composition or its diluted solution to act on surroundings, habitats or storage areas of plants and plant parts, and in the case of propagation organs, particularly, in the case of seeds, furthermore by applying one- or multilayer coating.

As already described above, the agrochemical composition of this embodiment can be applied to all plants and parts thereof, but in a preferred embodiment, the agrochemical composition is applied to wild plant species and plant cultivars or to plant species and plant cultivars obtained by customary biological breeding, such as crossing or protoplast fusion, and to parts thereof. In a further preferred embodiment, the agrochemical composition is applied to transgenic plants and plant cultivars (genetically modified organisms) obtained by genetic engineering, if appropriate, in combination with a customary method, and to parts thereof.

Particularly preferably, the agrochemical composition of this embodiment is applied to plants of plant cultivars which are all commercially available or in use. The plant cultivars may be plants having new properties ("traits") obtained by customary breeding, by mutagenesis, or by recombinant DNA techniques.

Depending on the plant species or plant cultivars as well as their growing location and growth conditions (soils, climate, growing period, nutrition), the treatment with the agrochemical composition of this embodiment may also result in superadditive ("synergistic") effects. For example, a reduced application rate and/or a widening of the activity spectrum and/or an increase in the activity of the substances and compositions which can be used in the agrochemical composition of this embodiment, better plant growth, increased tolerance to high or low temperatures, increased tolerance to drought or to salt content in water or soil, increased flowering performance, easier harvesting, accelerated maturation, higher harvest yields, a better quality and/or higher nutritional value of the harvested products, better storage stability and/or processability of the harvested products are possible, and these effects exceed the effects which were actually to be expected.

All plants which, in the genetic modification, received genetic material imparting particularly advantageous useful traits to the plants are encompassed by the transgenic plants or plant cultivars (i.e., those obtained by genetic engineering) which are preferably to be treated with the agrochemical composition of this embodiment. Examples of such traits are better plant growth, increased tolerance to high or low temperatures, increased tolerance to drought or to salt content in water or soil, increased flowering performance, easier harvesting, accelerated maturation, higher harvest yields, a better quality and/or higher nutritional value of the harvested products, and better storage stability and/or higher processability of the harvested products.

Examples of the plants to which the agrochemical composition of this embodiment can be applied include

important crop plants such as cereals (wheat, rice), maize, soybeans, potatoes, cotton, oilseed rape, beetroots, sugar cane, and fruit plants (with fruits of apples, pears, citrus fruits and grapes), and particular emphasis is given to rice and potatoes.

## EXAMPLES

Specific Examples of the present invention are described below, but the present invention is not limited to these Examples. In the following Examples and Comparative Examples, the "parts" and "%" refer to parts by mass and mass%, respectively.

### [Example 1 and Comparative Example 1]

<Preparation and Evaluation of Oily Suspension Agrochemical Composition>

Composition A (Comparative Example 1) and Composition B (Example 1) were prepared using the components and mixing ratios shown in Table 1 below. After the preparation, the obtained Composition A and Composition B were stored for 1 day or stored at 54°C for 2 weeks (accelerated test), and each composition was measured for the viscosity.
Incidentally, the viscosity was measured using a B-type viscometer, VISCOMETER TVB-10M, manufactured by Toki Sangyo Co., Ltd. and a spindle No. M2 at a rotation speed of 30 rpm and 20°C.
Furthermore, details of the components shown in Table 1 are as follows.

- BiP: produced by Kumiai Chemical Industry Co., Ltd.
- POE dodecyl ether: Brij L4 produced by Croda Inc.
- Ca branched dodecylbenzenesulfonate: RHODACAL 70 produced by Solvay Inc.
- POE castor oil: ETOCAS 10 produced by Croda Inc.
- POE sorbitol hexaoleate: ATLAS G-1096 produced by Croda Inc.
- Na dibutylnaphthalenesulfonate: Newkalgen BX-C produced by Takemoto Oil & Fat Co., Ltd.
- Hydrophobic silica: AEROSIL R805 produced by Nippon Aerosil Co., Ltd.
- Vegetable oil-derived FAME: METHYL OLEATE HO produced by Mosselman

The results are shown in Tale 1.
[Table 1]

Table 1

| Components | | Mixing Ratio (%) | |
|---|---|---|---|
| | | Composition A | Composition B |
| BiP | component (B) | 4.93 | 4.93 |
| POE dodecyl ether | emulsifier | 14.0 | 14.0 |
| Ca branched dodecylbenzenesulfonate | emulsifier | 2.00 | 2.00 |
| POE castor oil | emulsifier | 12.50 | 12.50 |
| POE sorbitol hexaoleate | emulsifier | 2.50 | 2.50 |
| Na dibutylnaphthalenesulfonate | component (C) | | 5.20 |
| Hydrophobic silica | anti-settling agent | 0.50 | 0.50 |
| Vegetable oil-derived FAME | component (A) | 63.57 | 58.37 |
| Total | | 100.00 | 100.00 |
| Viscosity [mPa·s (20°C)] | after storage for 1 day after storage at 54°C for 2 weeks | 181<br>459 | 152<br>149 |

As seen from Table 1, in Composition A, the viscosity after storage was increased, whereas in Composition B, the viscosity after storage was not increased.

### [Examples 2 to 4 and Comparative Examples 2 to 8]

Compositions C to N were prepared using the components and mixing ratios shown in Table 2 below. Here,

Compositions D to N were the same as Composition C except that those shown in Table 3 below were added as the component (C). In addition, out of the components shown in Table 2, except for those added as the component (C), the same components as the components used in Example 1 were employed. After the preparation, an experiment where each of these compositions stored for 1 day or stored at 54°C for 2 weeks (accelerated test) is measured for the viscosity in the same manner as in Example 1 and Comparative Example 1, was performed twice.

The results are shown in Table 3 below.

[Table 2]

Table 2

| Components | | Mixing Ratio (%) | |
|---|---|---|---|
| | | Composition C | Compositions D to N |
| BiP | component (B) | 4.93 | 4.93 |
| POE dodecyl ether | emulsifier | 14.0 | 14.0 |
| Ca branched dodecylbenzenesulfonate | emulsifier | 2.00 | 2.00 |
| POE castor oil | emulsifier | 12.50 | 12.50 |
| POE sorbitol hexaoleate | emulsifier | 2.50 | 2.50 |
| Anionic surfactant | component (C) | | 5.20 |
| Hydrophobic silica | anti-settling agent | 0.50 | 0.50 |
| Vegetable oil-derived FAME | component (A) | 58.37 | 58.37 |
| Total | | 94.80 | 100.00 |

[Table 3]

Table 3

| | Composition | Component (C) | Viscosity [mPa·s (20°C)] | | | |
|---|---|---|---|---|---|---|
| | | | 1st Time | | 2nd Time | |
| | | | After storage for 1 day | After storage at 54°C for 2 weeks | After storage for 1 day | After storage at 54°C for 2 weeks |
| Comparative Example 2 | C | | 269 | 341 | 256 | 387 |
| Example 2 | D | Na dibutylnaphthalenesulfonate | 177 | 150 | 163 | 138 |
| Example 3 | E | Na diisopropylnaphthalenesulfonate | 273 | 203 | 272 | 196 |
| Example 4 | F | Na dodecylbenzenesulfonate | 216 | 175 | 235 | 181 |
| Comparative Example 3 | G | Na dioctylsulfosuccinate | 317 | 456 | 328 | 313 |
| Comparative Example 4 | H | Na dodecylsulfate | 317 | 314 | 295 | 302 |
| Comparative Example 5 | I | Na dibutylnaphthalenesulfonate formalin condensate | 259 | 360 | 244 | 467 |
| Comparative Example 6 | J | Na ligninsulfonate | 285 | 412 | 238 | 445 |
| Comparative Example 7 | K | Na polycarboxylate | 353 | 663 | 292 | 743 |
| Comparative Example 8 | L | $NH_4$ POA allylphenyl ether sulfate | 305 | 457 | 265 | 480 |
| Comparative Example 9 | M | Ca branched dodecylbenzenesulfonate | 252 | 345 | 235 | 399 |
| Comparative Example 10 | N | K POE arylphenyl ether phosphate | 281 | 340 | 254 | 411 |

Incidentally, details of the component (C) in Table 3 are as follows.

- Na dibutylnaphthalenesulfonate: Newkalgen BX-C produced by Takemoto Oil & Fat Co., Ltd.
- Na diisopropylnaphthalenesulfonate: SUPRASIL WP produced by Solvay Inc.
- Na dodecylbenzenesulfonate: Newkalgen SX-C produced by Takemoto Oil & Fat Co., Ltd.
- Na dioctylsulfosuccinate: AIRROL CT-1 produced by Toho Chemical Industry, Co., Ltd.
- Na dodecylsulfate: Emal 10 Powder produced Kao Corporation
- Na butylnaphthaleesulfonate formalin condensate: Demol SN-B produced by Kao Corporation
- Na ligninsulfonate: Pearllex NP produced by Nippon Paper Chemicals Co., Ltd.
- Na polycarboxylate: Newkalgen WG-5 produced by Takemoto Oil & Fat Co., Ltd.
- $NH_4$ POA allylphenyl ether sulfate: Newkalgen FS-7PG produced by Takemoto Oil & Fat Co., Ltd.
- Ca branched dodecylbenzenesulfonate: RHODACAL 70 produced by Solvay Inc.
- K POE arylphenyl ether phosphate: Newkalgen FS-3K produced by Takemoto Oil & Fat Co., Ltd.

As seen from Table 3, in Compositions D to F (Examples 2 to 4), the viscosity after storage was not increased, whereas in Compositions C and I to N (Comparative Examples 2 and 5 to 10), the viscosity after storage was increased. Compositions G and H (Comparative Examples 3 and 4) using a dioctylsulfosuccinate salt and a dodecylsulfate salt may or may not show the same behavior as that in Examples, and thus, the effects were not stable during the test. These results infer the possibility that the alkylarylsulfonate monovalent salt specifically suppresses an increase in the viscosity.

[Example 5 and Comparative Example 11]

The difference in the disease control effect due to the presence or absence of an alkylarylsulfonate salt was evaluated.
Composition O (Example 5) and Composition P (Comparative Example 11) having the formulations shown in Table 4 were prepared.
In addition, details of the components shown in Table 4 are as follows.

- BiP technical grade: produced by Kumiai Chemical Industry Co., Ltd.
- POE dodecyl ether: Brij L4 produced by Croda Inc.
- Ca branched dodecylbenzenesulfonate: RHODACAL 70 produced by Solvay Inc.
- POE castor oil: ETOCAS 10 produced by Croda Inc.
- Na diisopropylnaphthalenesulfonate: SUPRASIL WP produced by Solvay Inc.
- Hydrophobic silica: AEROSIL R805 produced by Nippon Aerosil Co., Ltd.
- Vegetable oil-derived FAME: METHYL OLEATE HO produced by Mosselman

[Table 4]

Table 4

| Components | Mixing Ratio (%) | |
|---|---|---|
| | Composition O | Composition P |
| BiP technical grade (98.75%) | 4.85 | 4.85 |
| POE dodecyl ether | 14.49 | 14.49 |
| Ca branched dodecylbenzenesulfonate | 2.09 | 2.09 |
| POE castor oil | 12.82 | 12.82 |
| Na diisopropylnaphthalenesulfonate | 5.20 | |
| Hydrophobic silica | 2.60 | 2.60 |
| Vegetable oil-derived FAME | 57.96 | 57.96 |
| Total | 100.00 | 94.80 |

Three pots of 0.09 m×0.09 m in each of which one tomato (cultivar: ponderosa) strain in the 6th compound leaf stage had been planted were placed on a table of 0.25 $m^2$. A diluted solution obtained by 300-fold diluting each of Compositions O and P with water was sprayed by means of a compressor gun at such an application dose rate as to allow 7.5 ml of the diluted solution to be sprayed per the area of 0.25 $m^2$ (corresponding to 300 liter/ha).

Subsequently, potato Phytophthora-infected leaves passaged using tomato were put in distilled water and thoroughly stirred to prepare a zoosporangium liquid suspension having a number of zoosporangia of $3\times10^5$/ml. The spray-treated plant in a pot was uniformly sprayed and inoculated using hand spray with the liquid suspension. Immediately after that, the pots were transferred into a greenhouse (20°C, 100% RH, dark place) and put under control until the assessment time.
Three to four days after spraying and inoculation with the zoosporangium liquid suspension, the index was assessed for each compound leaf (third to fifth compound leaf) according to the following standards to calculate the disease severity and control value.

$$\text{Disease severity}=(\Sigma(\text{graded number of diseased leaves}\times\text{index}))/(\text{number of strains assessed}\times4)\times100$$

$$\text{Control value}=(1-(\text{disease severity of treated area}/\text{severity of untreated area}))\times100$$

Disease incidence index

0: No disease incidence.
1: The lesion area is less than 5%.
2: The lesion area is 5% or more and less than 33.3%.
3: The lesion area is 33.3% or more and less than 66.6%.
4: The lesion area is 66.6% or more.

As a result, the control value was 100 even if either one of Compositions O and P is used. This demonstrates that even when Na diisopropylnaphthalenesulfonate is added to an oily suspension in which BiP is dispersed with FAME to increase the agrochemical activity of BiP, the agrochemical activity is maintained.

[Example 6 and Comparative Example 12]

With respect to Compositions O and P, the difference in disease control effect against rainfall was evaluated.
The control value was determined in the same manner as in Example 5 and Comparative Example 11 except that the following rainfall treatment was performed between spraying of a diluted solution of each composition and spraying of a zoosporangium liquid suspension.
In the rainfall treatment, 1 hour after spraying of a diluted solution of each composition, a rainfall treatment corresponding to a precipitation of 30 mm/hr for 2 hours was conducted, and then, air drying was performed for 1 hour.
As a result, the compositions O and P showed substantially the same disease control effect.
While the invention has been described in detail and with reference to specific embodiments thereof, it will be apparent to one skilled in the art that various changes and modifications can be made therein without departing from the spirit and scope of the invention.
This application is based on Japanese Patent Application (Patent Application No. 2018-192087) filed on October 10, 2018, the entirety of which is incorporated herein by way of reference. In addition, all references cited herein are incorporated in their entirety herein.

## Claims

1. An oily suspension agrochemical composition containing (A) a fatty acid methyl ester assuming a liquid state at ordinary temperature, (B) benthiavalicarb-isopropyl, and (C) an alkylarylsulfonate monovalent salt.

2. The oily suspension agrochemical composition according to claim 1, wherein crystal molecules of (B) benthiavalicarb-isopropyl are dispersed in a continuous phase containing the (A) fatty acid methyl ester as a main component.

3. The oily suspension agrochemical composition according to claim 1 or 2, wherein the (C) alkylarylsulfonate monovalent salt is an alkali metal salt.

4. The oily suspension agrochemical composition according to any one of claims 1 to 3, wherein the (C) alkylarylsulfonate monovalent salt is an alkylnaphthalenesulfonate salt.

**5.** The oily suspension agrochemical composition according to any one of claims 1 to 3, wherein the (C) alkylarylsulfonate monovalent salt is a dialkylarylsulfonate salt.

**6.** The oily suspension agrochemical composition according to any one of claims 1 to 3, wherein the (A) fatty acid methyl ester is a vegetable oil-derived fatty acid methyl ester.

## INTERNATIONAL SEARCH REPORT

International application No.
PCT/JP2019/038875

A. CLASSIFICATION OF SUBJECT MATTER
Int.Cl. A01N47/12(2006.01)i, A01N25/00(2006.01)i, A01N25/04(2006.01)i, A01P3/00(2006.01)i

According to International Patent Classification (IPC) or to both national classification and IPC

B. FIELDS SEARCHED

Minimum documentation searched (classification system followed by classification symbols)
Int.Cl. A01N47/12, A01N25/00, A01N25/04, A01P3/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2018-83757 A (NIHON NOHYAKU CO., LTD.) 31 May 2018, claims 1, 4, examples & US 2018/0027806 A1 (claims 1, 9, examples) & WO 2016/132990 A1 & EP 3262936 A1 | 1-6 |
| A | WO 2017/188070 A1 (KUMIAI CHEMICAL INDUSTRY CO., LTD.) 02 November 2017, claim 8 & US 2019/0053496 A1 (claim 8) & EP 3453257 A1 & CN 109068628 A & KR 10-2019-0003472 A | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
06 December 2019 (06.12.2019)

Date of mailing of the international search report
17 December 2019 (17.12.2019)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No. PCT/JP2019/038875

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-150346 A (SUMITOMO CHEMICAL CO., LTD.) 03 July 2008, claims 1-4 & US 2008/0153884 A1 (claims 1-4) & FR 2910240 A & BR PI0704844 A & ES 2323116 A & ZA 200711129 A & IT T020070903 A & IL 188060 A & TR 200708875 A & AU 2007242950 A & TW 200829160 A & IT T020070903 A1 | 1-6 |
| A | JP 2008-518933 A (VALENT U.S.A. CORPORATION, AKZO NOBEL SURFACE CHEMISTRY LLC) 05 June 2008, claims 1, 10-11, 22-24 & US 2006/0094601 A1 (claims 1, 10-11, 14) & US 2010/0087318 A1 & WO 2006/050141 A1 & EP 1811837 A1 & KR 10-2007-0099553 A & CN 101094592 A | 1-6 |
| A | JP 03-056404 A (BASF CORPORATION) 12 March 1991, claim 1 & US 5084087 A (claim 1) & EP 394847 A2 & DE 69004731 T & AU 5380690 A & ES 2059866 T & CA 2015269 A & HU 53772 A & AU 626411 B & HU 902562 A0 | 1-6 |
| A | JP 2012-51843 A (NISSAN CHEMICAL INDUSTRIES, LTD.) 15 March 2012, claim 6, paragraphs [0135], [0137], [0139] (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08176115 A
- JP H09183703 A
- JP H09323984 A
- JP T2003501448 PCT
- JP 2005533837 T
- JP 2008127366 A
- JP 2014520154 T
- JP 2013529660 T
- JP 2009519258 T
- JP H07010705 A
- JP 2018192087 A